# EUROPÄISCHE PATENTSCHRIFT

(11) **EP 1 026 649 B1**
(45) Veröffentlichungstag und Bekanntmachung des Hinweises auf die Patenterteilung: **15.09.2004**
(21) Anmeldenummer: 99125603.3
(22) Anmeldetag: 22.12.1999
(51) Int. Cl.: G08G 1/09, G08G 1/127, G08G 1/01

(54) **Verfahren und Vorrichtung zur Bereitstellung von Verkehrsinformation**
Method and device to prepare traffic information
Procédé et dispositif de préparation d'information de circulation

(30) Priorität: 06.02.1999 DE 19904909
(43) Veröffentlichungstag der Anmeldung: 09.08.2000
(73) Patentinhaber: DaimlerChrysler AG, 70567 Stuttgart (DE)
(72) Erfinder: Aleksic, Mario, 78647 Trossingen (DE); Kerner, Boris, Prof. Dr., 70619 Stuttgart (DE)

(56) Entgegenhaltungen:
- EP-A- 0 884 708
- WO-A-92/14215
- DE-A- 19 754 483

## Beschreibung

Die Erfindung bezieht sich auf ein Verfahren zur Bereitstellung von Verkehrsinformationen für ein jeweiliges Fahrzeug auf einem Verkehrswegenetz nach dem Oberbegriff des Anspruchs 1 sowie auf eine zur Durchführung eines derartigen Verfahrens geeignete Vorrichtung nach dem Oberbegriff des Anspruchs 5.

Verfahren und Vorrichtungen dieser Art werden beispielsweise dazu verwendet, für Straßenfahrzeuge, die ein gegebenes Straßenverkehrswegenetz befahren können, Verkehrsinformationen, d.h. den Verkehrszustand charakterisierende Informationen, bereitzustellen, um sie zur Zielführung, Routenwahl, Reisezeitschätzung etc. zu verwenden. Je nachdem, ob die Verarbeitung der Verkehrsinformationen primär fahrzeugseitig oder in einer Verkehrszentrale erfolgt, wird zwischen autonomen Systemen einerseits und zentralenbasierten Systemen andererseits unterschieden, wobei dynamische Zielführungssysteme einen wichtigen Anwendungsfall darstellen. Die dynamischen Zielführungssysteme unterscheiden sich von statischen dadurch, daß sie bei der Berechnung der optimalen Route Verkehrsdaten berücksichtigen, d.h. Daten über die Verkehrslage im Verkehrswegenetz.

In zentralenbasierten dynamischen Zielführungssystemen werden in einer Verkehrszentrale optimale Routen berechnet und diesbezügliche Daten zum Fahrzeug übertragen. Unter "optimal" wird dabei vorliegend eine Route verstanden, für die eine der Optimierungsprozedur zugrundegelegte Kostenfunktion einen Optimalwert, z.B. ein Minimum, annimmt, wobei als Kostenfunktion häufig die Reisezeit benutzt wird. Ein solches System ist z.B. in der WO 92/14215 beschrieben. Das dortige System benötigt als von einem jeweiligen Fahrzeug zur Zentrale zu übermittelnde Eingangsdaten sowohl die Information über den Startort als auch die Information über einen gewünschten Zielort. Abhängig von diesen Eingangsdaten wird dann unter Berücksichtigung aktueller und/ oder prognostizierter Verkehrsdaten in der Zentrale eine unter vorgebbaren Optimierungs- und Randbedingungen, wie minimale Fahrzeit, optimale Fahrtroute vom Startort zum Zielort sowie optional eine vorgebbare Anzahl von Alternativrouten berechnet. Die Zentrale überträgt anschließend die zugehörigen Fahrtrouten-Geometriedaten.

Ein spezieller Algorithmus zur Berechnung schnellster Routen in einem Verkehrswegenetz ist in dem Zeitschriftenaufsatz E.W. Dijkstra, A note on two problems in connection with graphs, Numer. Math. 1, Seite 269 beschrieben. Alternativ ist jedoch auch eine andere Kostenfunktion verwendbar, z. B. der Energieverbrauch, der zum Befahren eines jeweiligen Streckenabschnitts, nachfolgend auch Streckenkante oder kurz Kante bezeichnet, benötigt wird. In autonomen dynamischen Zielführungssystemen wird die optimale Route fahrzeugseitig auf der Basis von aktuellen Verkehrsinformationen berechnet, die von einer Verkehrszentrale zum Fahrzeug übertragen werden, z. B. in Form herkömmlicher TMC-Verkehrsmeldungen.

Die meisten bekannten dynamischen Zielführungssysteme beschränken sich auf die Bereitstellung und Berücksichtigung aktueller Verkehrsinformationen, d. h. von Informationen über die aktuelle Verkehrslage im Verkehrswegenetz, wie sie vor allem durch über das Verkehrswegenetz verteilt angeordnete Verkehrslagedetektoren gewonnen werden. Nun kann sich jedoch die Verkehrslage, insbesondere verkehrsflussrelevante Zustände wie Verkehrsstaus und dergleichen, und damit die jeweils optimale Route zwischen zwei Punkten des Wegenetzes im Lauf der Zeit sehr schnell gravierend ändern. Dadurch kann es zu drastischen Abweichungen des sich für eine tatsächliche Fahrt ergebenden Wertes der Kostenfunktion, wie der Reisezeit oder des Fahrzeugenergieverbrauchs, von dem zur berechneten optimalen Route gehörigen, geschätzten Kostenfunktionswert kommen.

Um hier eine Verbesserung zu erreichen, wurde bereits verschiedentlich die Durchführung von Verkehrslageprognosen und die Berücksichtigung daraus gewonnener, prognostizierter Verkehrsdaten zusätzlich zu aktuellen Verkehrsdaten bei der Fahrzeugzielführung, Routenfindung und/oder Reisezeitschätzung vorgeschlagen, siehe die Patentschrift DE 195 26 148 C2, die Offenlegungsschriften DE 196 47 127 A1 und DE 198 06 197 A1 sowie die nicht vorveröffentlichte, ältere deutsche Patentanmeldung 198 35 979.9.

Derartige Verkehrsprognoseverfahren werden wegen des damit verbundenen Rechenaufwandes in einer jeweiligen Verkehrszentrale durchgeführt, die dann den beteiligten Fahrzeugen die prognostizierten zusätzlich zu aktuellen Verkehrsdaten zur Verfügung stellen kann. Eine Schwierigkeit stellt hierbei die Datenmenge dar, denn einerseits können Verkehrsinformationen aufgrund der beschränkten Kapazität der zur Verfügung stehenden Kommunikationskanäle nur in sehr begrenzter Menge von der Zentrale zum jeweiligen Fahrzeug übertragen werden, und andererseits ist in der Zentrale oft nicht genau bekannt, welche Verkehrsinformationen ein fahrzeugseitiges Zielführungssystem zur Berechnung verkehrsabhängig optimaler Routen mit einem fahrzeugseitig vorhandenen Routensuchalgorithmus benötigt. Es besteht daher Bedarf nach Verfahren und Vorrichtungen, mit denen in einer möglichst geringen, zu übertragenden Datenmenge zuverlässige und fahrzeugseitig gut auswertbare Verkehrsinformationen bereitgestellt werden können, die sowohl aktuelle als auch für die relevanten Streckenabschnitte zeitrichtig prognostizierte Daten über die zu erwartende Verkehrslage berücksichtigen.

In der Offenlegungsschrift DE 198 06 197 A1 sind Verfahren und Vorrichtungen der eingangs genannten Art beschrieben, bei denen von einer Verkehrszentrale aktuelle und prognostizierte Verkehrsdaten geordnet nach sogenannten Bezugsgebieten bereitgestellt und über einen zugehörigen Kommunikationskanal an das Fahrzeug übertragen werden. Zur Konstruktion der Bezugsgebiete werden ausgehend von einem Startzeitpunkt aufeinanderfolgende Prognosezeitpunkte festgelegt und diesen jeweils als Bezugsgebiet ein Wegenetz-Teilbereich zugeordnet, der ein Gebiet beschreibt, in welchem sich das Fahrzeug im Zeitraum zwischen dem betrachteten und dem nächsten Prognosezeitpunkt voraussichtlich befindet. Zur Bestimmung der Bezugsgebiete wird vorgeschlagen, die voraussichtliche Fahrzeugentfernung vom Startort heranzuziehen, wie sie sich zum betreffenden Zeitpunkt aus abgelegten Geschwindigkeitsdaten über die mittlere angenommene Fahrzeuggeschwindigkeit im betrachteten Wegenetzbereich ergibt, die fest oder straßentypabhängig unterschiedlich vorgegeben werden können.

Der Erfindung liegt als technisches Problem die Bereitstellung eines Verfahrens und einer Vorrichtung der eingangs genannten Art zugrunde, mit denen mit relativ geringem Aufwand vergleichsweise zuverlässige und genaue Verkehrsinformationen zur weiteren Nutzung für ein jeweiliges Fahrzeug auf einem Verkehrswegenetz bereitgestellt werden können, insbesondere für ein fahrzeugseitig vorhandenes, autonomes dynamisches Zielführungssystem zur Zielführung, Routenplanung etc.

Die Erfindung löst dieses Problem durch die Bereitstellung eines Verfahrens mit den Merkmalen des Anspruchs 1 sowie einer zu dessen Durchführung geeigneten Vorrichtung mit den Merkmalen des Anspruchs 5. Charakteristischerweise enthält die Bereitstellung von Verkehrsinformationen bei diesem Verfahren und dieser Vorrichtung zunächst eine zentralenseitig durchgeführte, vom jeweiligen Startort und Startzeitpunkt ausgehende Ermittlung von bezüglich einer vorgegebenen, verkehrsabhängigen Kostenfunktion, wie der Reisezeit, optimalen Routen zu den Streckenkanten wenigstens eines den Startort enthaltenden Wegenetz-Teilbereiches. Das verwendete Routensuchverfahren arbeitet verkehrsdatenabhängig unter Berücksichtigung von in der Verkehrszentrale vorhandenen, aktuellen und prognostizierten Verkehrsdaten, welche die aktuellen und prognostizierten Funktionswerte der Kostenfunktion für die einzelnen Streckenkanten des Wegenetzes sowie je nach Anwendungsfall weitere Daten über den aktuellen und den zukünftigen Verkehrszustand umfassen. Die Verkehrsdaten über den Zustand zum aktuellen Zeitpunkt ebenso wie zu den verschiedenen vorgegebenen Prognosezeitpunkten für die betrachteten Streckenkanten liegen in der Verkehrszentrale schon abrufbar vor oder können von ihr jedenfalls durch ein herkömmliches Verkehrsprognoseverfahren bereitgestellt werden. Aus der für die jeweilige Streckenkante berechneten optimalen Route folgt unmittelbar die zugehörige vorausgeschätzte Ankunftszeit, zu der ein am Startort zum Startzeitpunkt startendes und die optimale Route befahrendes Fahrzeug voraussichtlich die betreffende Streckenkante erreicht.

Wesentlich ist nun, daß aus den in der Verkehrszentrale zur jeweiligen Streckenkante vorhandenen aktuellen und prognostizierten, d.h. zu den vorgegebenen Prognosezeiten zu erwartenden Werten der Kostenfunktion derjenige Kostenfunktionswert ausgewählt wird, der zum Ankunftszeitpunkt gemäß der optimalen Route gehört. Neben dem ausgewählten Kostenfunktionswert können je nach Bedarf weitere, in der Verkehrszentrale für die gegebene Strekkenkante und den gegebenen Ankunftszeitpunkt vorliegende Verkehrsdaten ausgewählt werden. Erfindungsgemäß ist charakteristisch, daß es gerade die auf diese Weise kantenspezifisch und entsprechend den berechneten optimalen Routen zeitrichtig ausgewählten Kostenfunktionswerte für die einzelnen Streckenkanten des betrachteten Wegenetz-Teilbereiches sind, die als übertragbare Verkehrsdaten in der Zentrale aufbereitet und bereitgestellt werden oder jedenfalls einen Teil dieser zur Übertragung aufbereiteten Verkehrsdaten bilden.

Mit dieser Vorgehensweise lassen sich relativ zuverlässige aktuelle und prognostizierte Verkehrslagedaten als aus Gründen der Übertragungskapazität möglichst kompakte Datenmenge bereitstellen. Insbesondere ist schon ein fahrzeugseitiges Zielführungssystem herkömmlicher Bauart ohne bauliche Veränderungen in der Lage, mit derartigen übertragenen Verkehrsinformationen eine optimale Zielführung oder Routenplanung vorzunehmen, bei der nicht nur von der aktuellen Verkehrslage Gebrauch gemacht wird, sondern die darüber hinaus die voraussichtliche zukünftige Verkehrslage berücksichtigt, da diese dem System über die übermittelten Kostenfunktionswerte für die relevanten Steckenkanten vermittelt wird. Außerdem wird eine deutlich höhere Genauigkeit für solche autonomen Zielführungsprozesse unter Verwendung der erfindungsgemäß bereitgestellten Verkehrsinformationen im Vergleich zu herkömmlichen Systemen erreicht, bei denen die übertragenen Verkehrsinformationen allenfalls grobe Informationen über eventuell in einem recht großräumigen Gebiet zu einem späteren Prognosezeitpunkt zu erwartende Verkehrszustandsobjekte, wie Staus, zähfließender Verkehr etc., enthalten, ohne daß erfindungsgemäß signifikant höhere Datenmengen übertragen werden müssen. Zudem wird die Genauigkeit der Auswahl der Kostenfunktionswerte gegenüber der Genauigkeit bei der in herkömmlichen Systemen gebräuchlichen Bestimmung von wie auch immer gearteten Bezugsgebieten, d.h. Entfernungszonen um den jeweiligen Startort, erhöht und es entfällt die Unterscheidung der Verkehrsinformationen nach solchen Bezugsgebieten bzw. Entfernungszonen.

Bei einem nach Anspruch 2 weitergebildeten Verfahren und einer zu dessen Durchführung geeignet weitergebildeten Vorrichtung nach Anspruch 6 beinhaltet die Aufbereitung der bereitzustellenden Verkehrsinformationen, daß die übertragungsrelevanten Verkehrsdaten in ein fahrzeugseitig verwendetes Datenformat gebracht werden, d.h. in ein Datenformat, das in dem fahrzeugseitigen Endgerät verwendet wird, welches die Verkehrsinformationen nach Übertragung empfängt und weiterverarbeitet. Dadurch können bestehende Fahrzeug-Endgeräte praktisch unverändert für das vorliegende, erfindungsgemäße System eingesetzt werden. Wenn z.B. das Fahrzeug-Endgerät als Verkehrsinformationen lediglich Staumeldungen verarbeiten kann, können daran angepaßt zentralenseitig die für die relevanten Streckenkanten ausgewählten Kostenfunktionswerte, soweit sie einem stauartigen Verkehrszustand entsprechen, zu fiktiven Staumeldungen aufbereitet und in dieser Weise übertragen werden.

Bei einem nach Anspruch 3 weitergebildeten Verfahren beinhaltet die Verkehrsdatenaufbereitung eine Erzeugung von Verkehrsereignissen als individuelle verkehrliche Objekte, die entsprechend identifizierbar sind. Solche Ereignisse können beispielsweise erkannten, besonderen Verkehrsflußzuständen, wie Stau, zähflüssiger Verkehr etc., oder einer detektierten übermäßigen Abweichung des ausgewählten Kostenfunktionswertes von einem normalerweise zu erwartenden Referenz-Kostenfunktionswert zugeordnet werden, wobei der Referenz-Kostenfunktionswert z.B. den für ungestörten, freien Verkehr geltenden Kostenfunktionswert repräsentieren kann.

Bei einem nach Anspruch 4 weitergebildeten Verfahren und einer zu dessen Durchführung geeignet weitergebildeten Vorrichtung nach Anspruch 7 beinhaltet die Verkehrsdatenaufbereitung eine Erzeugung von Löschmeldungen, mit denen spezifisch solche Verkehrsinformationen, die zu einem früheren Zeitpunkt bereitgestellt wurden, als aktuell nicht mehr gültig indiziert werden und gelöscht werden können. Dies verhindert, daß eine aufgrund zwischenzeitlich veränderter Verkehrslage nicht mehr gültige, frühere Verkehrsinformation zu lang im Fahrzeug-Endgerät gespeichert bleibt und eventuell andere, davon abhängige Verkehrsinformationen verfälscht, wodurch es im Fahrzeug aufgrund daraus resultierender falscher Kostenfunktionswerte zur Berechnung einer nicht optimalen Route kommen kann.

Vorteilhafte Ausführungsbeispiele der Erfindung sind in den Zeichnungen dargestellt und werden nachfolgend beschrieben. Hierbei zeigen:
- Fig. 1: ein schematisches Funktionsblockdiagramm eines Verfahrens und einer Vorrichtung zur Bereitstellung von Verkehrsinformationen für ein jeweiliges Fahrzeug auf einem Verkehrswegenetz,
- Fig. 2: einen Ausschnitt des im System von Fig. 1 betrachteten Verkehrswegenetzes zur Veranschaulichung eines verwendeten Routensuchverfahrens,
- Fig. 3: ein Diagramm eines beispielhaften Reisezeitverlaufs für eine Streckenkante von Fig. 2,
- Fig. 4: ein Diagramm entsprechend Fig. 3, jedoch für eine andere Streckenkante,
- Fig. 5: ein Diagramm entsprechend Fig. 3 zur Veranschaulichung einer Ereignisgenerierung,
- Fig. 6: ein Diagramm zur Veranschaulichung der zeitdiskreten Bereitstellung von Verkehrsdaten,
- Fig. 7: ein Diagramm entsprechend Fig. 6 zur Veranschaulichung der Erzeugung von Löschmeldungen,
- Fig. 8: ein Funktionsblockdiagramm entsprechend Fig. 1, jedoch mit fahrzeugbezogener statt fahrzeugunabhängiger Löschmeldungserzeugung,
- Fig. 9: ein Funktionsblockdiagramm entsprechend Fig. 1, jedoch mit fahrzeugunabhängiger Datentransformation,
- Fig. 10: ein Funktionsblockdiagramm entsprechend Fig. 8, jedoch mit fahrzeugbezogener Datentransformation, und
- Fig. 11: ein Funktionsblockdiagramm entsprechend Fig. 8, jedoch nur mit fahrzeugbezogener Datentransformation und fahrzeugbezogener Datenhaltung versandter Meldungen.

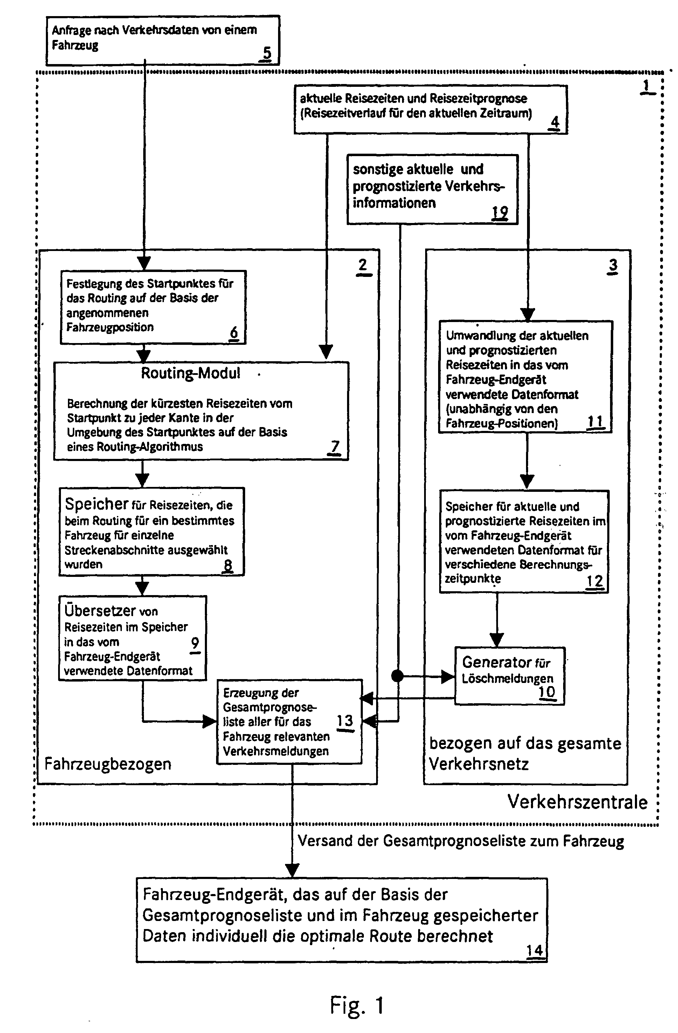

Fig. 1 veranschaulicht ein erstes Ausführungsbeispiel eines erfindungsgemäßen Verfahrens und einer erfindungsgemäßen Vorrichtung zur Bereitstellung von Verkehrsinformationen für ein jeweiliges Fahrzeug auf einem Straßenverkehrswegenetz, wobei die Erfindung alternativ in gleicher Weise auf andersartige Verkehrswegenetze anwendbar ist, wie für den Luft-, Schienen- und Schiffsverkehr oder Kombinationen hiervon. Die Grundidee besteht jeweils darin, fahrzeugbezogene, d.h. auf jeweilige Anfangsbedingungen eines Fahrzeugs in Form eines Startorts und eines Startzeitpunkts abgestellte Verkehrsinformationen in einer Verkehrszentrale derart bereitzustellen, daß sie einerseits möglichst gut die aktuelle und zentralenseitig prognostizierte Verkehrslage wenigstens in einem relevanten Umfeldbereich des betreffenden Fahrzeugs repräsentieren und andererseits in ihrem Datenumfang ausreichend gering sind, so daß sie über herkömmlich für diesen Zweck zur Verfügung stehende Kommunikationskanäle von der datenaufbereitenden Zentrale zum jeweiligen Fahrzeug übertragen werden können.

Dies wird vorliegend dadurch erreicht, daß aus zentralenseitig vorhandenen, aktuellen und prognostizierten Verkehrsdaten für die verschiedenen Streckenkanten des Verkehrswegenetzes jeweils speziell diejenigen ausgewählt werden, die für denjenigen Ankunftszeitpunkt gelten, zu dem das jeweilige Fahrzeug bei einer prognostizierten, am gegebenen Startort zum gegebenen Startzeitpunkt beginnenden Fahrt entlang einer berechneten optimalen Route die jeweilige Streckenkante erreicht bzw. befährt. Die optimale Route wird dabei in der Zentrale mittels eines herkömmlichen verkehrsabhängigen Routensuchverfahrens, auch Routing-Algorithmus bezeichnet, nach dem Gesichtspunkt ermittelt, daß eine vorgegebene, verkehrsabhängige Kostenfunktion einen Optimalwert annimmt. In den betrachteten Ausführungsbeispielen ist als Kostenfunktion die benötigte Reisezeit gewählt, d.h. als optimale Route wird diejenige mit der kürzesten Reisezeit vom Startort bis zur jeweiligen Streckenkante berechnet. Analog kann jedoch eine beliebige andere, für diesen Zweck herkömmlicherweise verwendete Kostenfunktion benutzt werden, z.B. der für das Befahren vom Fahrzeug benötigte Energie- bzw. Kraftstoffverbrauch. Zu den auszuwählenden Verkehrsdaten gehört insbesondere der zur jeweiligen Kante für den zugehörigen Ankunftszeitpunkt in der Zentrale vorhandene prognostizierte Funktionswert der für die Routensuche verwendeten Kostenfunktion. Weitere in dieser Weise gemäß der optimalen Route zeitrichtig für die jeweilige Streckenkante ausgewählte Verkehrsdaten können je nach Bedarf zusätzlich berücksichtigt werden.

Bei der in Fig. 1 schematisch gezeigten Systemauslegung ist eine punktiert umrahmt gezeichnete Verkehrszentrale 1 vorgesehen, die als hier relevante Bestandteile einen fahrzeugbezogenen Teil 2 und einen fahrzeugunabhängigen, sich auf das gesamte Verkehrswegenetz beziehenden Teil 3 sowie einen herkömmlichen, übergeordneten Reisezeitberechnungsteil 4 aufweist, in welchem fortlaufend Reisezeitverläufe für die verschiedenen Streckenkanten des vorgegebenen Verkehrswegenetzes für den aktuellen und für vorgegebene Prognosezeiträume ermittelt werden. Eine weitere Einheit 19 stellt je nach Bedarf vorgesehene sonstige, aktuelle und prognostizierte Verkehrsinformationen zur Verfügung, die z.B. von externen Informationsquellen erhalten werden.

Von den systembeteiligten Fahrzeugen können über dortige Sendegeräte 5 Anfragen nach Verkehrsdaten bzw. Verkehrsinformationen zur Zentrale 1 gesendet werden. Eine solche Anfrage enthält insbesondere die Informationen über den Startort, häufig der momentane Fahrzeugort bzw. Informationen, von denen in der Zentrale der Standort abgeschätzt und danach einer naheliegenden Kante im Netz zugeordnet werden kann, und über den Startzeitpunkt, häufig der gegenwärtige Zeitpunkt, als Ausgangsbedingungen, für welche die Verkehrsinformationen gewünscht werden. Bei der Abschätzung des Fahrzeugorts kann, falls vorhanden, Information über die gegenwärtige Fahrtrichtung des Fahrzeugs mit einbezogen werden, um die richtige Wahl zwischen zwei parallel verlaufenden, gegenläufigen Kanten zu treffen, die z.B. die beiden Fahrtrichtungen einer Autobahn repräsentieren. Die Anfrage wird in der Zentrale 1 einer Startbedingungs-Festlegungseinheit 6 zugeleitet, die daraus die erwähnten Ausgangsbedingungen für die Bereitstellung der Verkehrsinformationen extrahiert, d.h. insbesondere den Startort und den Startzeitpunkt.

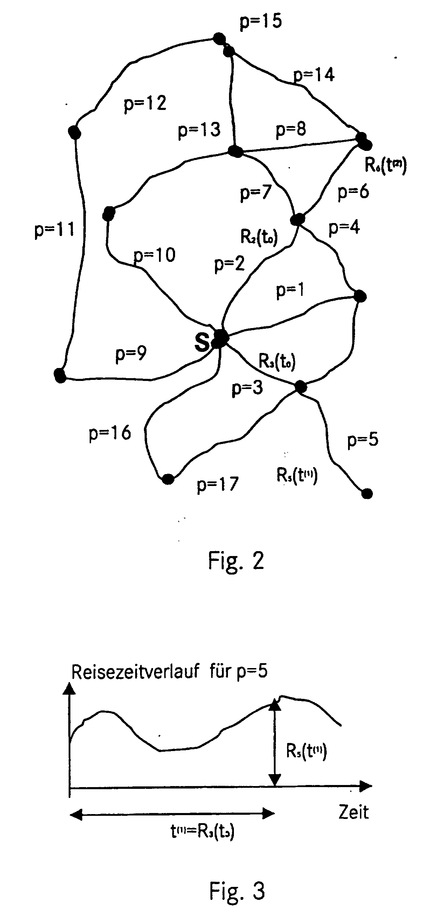

Diese Anfangsdaten übergibt die Startbedingungs-Festlegungseinheit 6 einem wie diese zum fahrzeugbezogenen Zentralenteil 2 gehörigen, nachgeschalteten Routing-Modul 7. Dieses berechnet dann, wie für einen den Startort S enthaltenden Wegenetz-Teilbereich in Fig. 2 schematisch veranschaulicht, die hinsichtlich der Kostenfunktion "Reisezeit" optimale Route für eine zum Anfangszeitpunkt t₀ beginnende Fahrt vom Startpunkt S zu jeder Straßenkante p=1,2,... in der Umgebung des Startpunktes S auf der Basis eines verkehrsabhängigen, d.h. Daten über die aktuelle und prognostizierte Verkehrslage berücksichtigenden Routensuchverfahrens, auch Routing-Algorithmus bezeichnet. Derartige Routing-Algorithmen sind an sich bekannt und bedürfen daher hier keiner weiteren Erläuterung. Die benötigten Verkehrsdaten erhält das Routing-Modul 7 von der übergeordneten Reisezeitberechnungseinheit 4. Die Berechnung der optimalen Route, d.h. in diesem Fall der Route mit der kürzesten Reisezeit, vom Startpunkt zur jeweiligen Straßenkante dient dazu, den Ankunftszeitpunkt zu bestimmen, zu dem ein zum Anfangszeitpunkt to am Startort S losfahrendes Fahrzeug bei optimaler Fahrtroute die betreffende Straßenkante erreicht. Für diesen Ankunftszeitpunkt wird dann aus den in der Zentrale 1, insbesondere in der Reisezeitberechnungseinheit 4, für die verschiedenen Prognosezeitpunkte vorhandenen Reisezeitdaten der zugehörige Reisezeitwert für die betreffende Straßenkante sowohl zur weiteren Routen-Berechnung als auch zur erfindungsgemäßen weiteren Aufbereitung als bereitzustellende Verkehrsinformation ausgewählt.

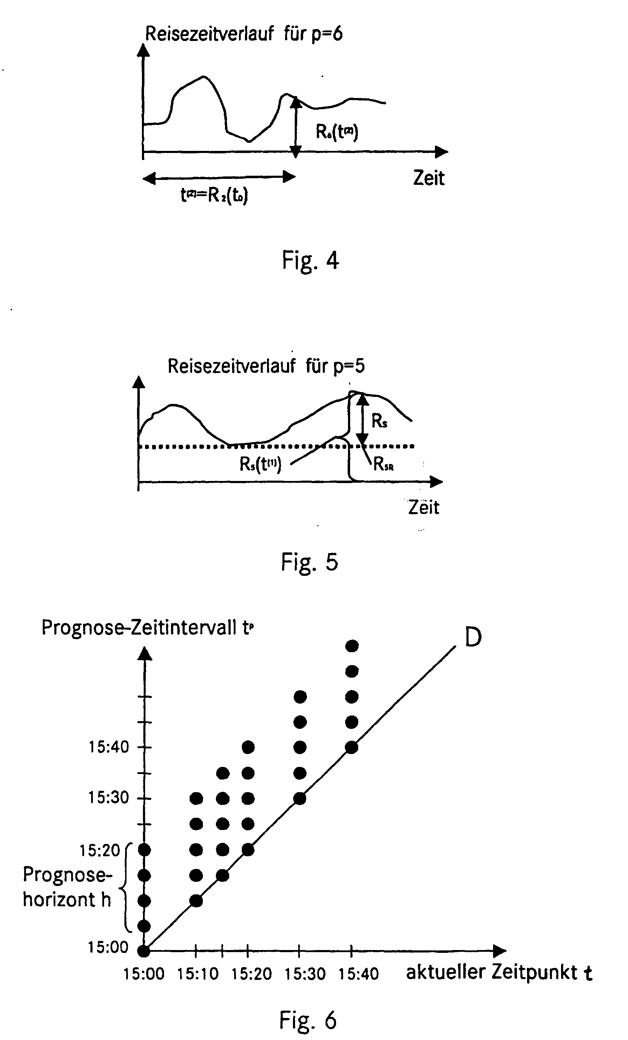

Diese Auswahl ist in den Fig. 3 und 4 anhand zweier konkreter Beispiele näher veranschaulicht. Fig. 3 zeigt für eine herausgegriffene Straßenkante p=5 beispielhaft den durch die Reisezeitberechnungseinheit 4 prognostisch ermittelten und in ihr gehaltenen Reisezeitverlauf R₅(t) in Abhängigkeit von der Zeit t. Wie mit der variierenden Kennlinie veranschaulicht, ist die kantenspezifische Reisezeit üblicherweise beträchtlichen Schwankungen unterworfen, und zwar schon im Mittel je nach Tageszeit, Wochentag etc. sowie durch besondere Verkehrsereignisse, wie temporäre Staus, Baustellen etc. Aus dem in der Zentrale 1 vorliegenden Reisezeitverlauf R₅ wird nun die zu demjenigen Ankunftszeitpunkt t⁽¹⁾ gehörige prognostizierte Reisezeit R₅(t⁽¹⁾) ausgewählt, zu dem die Streckenkante p=5 vom Startort S aus über die optimale, schnellste Route erreicht werden kann. Für dieses Beispiel führt diese optimale Route, wie in Fig. 2 zu erkennen, über die Strekkenkante p=3 vom Startort S bis zum Beginn der Streckenkante p=5 mit einer aktuell geschätzten Reisezeit R₃(t₀).

Fig. 4 zeigt ein analoges Beispiel für die herausgegriffene Straßenkante p=6. Die optimale Route für diese Streckenkante führt über die Streckenkante p=2 mit einer für den aktuellen Anfangszeitpunkt t₀ prognostizierten Reisezeit R₂(t₀), die somit den Ankunftszeitpunkt t⁽²⁾ für die Kante p=6 darstellt. Dementsprechend wird aus den für diese Kante p=6 in der Zentrale 1 vorliegenden, prognostizierten Reisezeitverlaufsdaten R₆(t) der zugehörige Reisezeitwert R₆(t⁽²⁾) als bereitzustellende Verkehrsinformation für diesen Streckenabschnitt ausgewählt.

Die solchermaßen ausgewählten Reisezeiten Rᵢ(t^{(j)}) für jede Kante p=i zum Ankunftszeitpunkt t^{(j)} gemäß der zugehörigen optimalen Route j werden dann nebst eventuell weiteren zeitentsprechenden Verkehrsdaten über diese Kante, wie z.B. die zugehörige Ankunftszeit t^{(j)} selbst, vom Routing-Modul 7 vor Einspeicherung in einen nachgeschalteten Reisezeitauswahlspeicher 8 geeignet aufbereitet. Aus diesem werden sie von einer anschließenden fahrzeugbezogenen Datentransformationseinheit (9) ausgelesen und weiterverarbeitet, was insbesondere eine Übersetzung der Daten in ein Datenformat beinhaltet, das in den fahrzeugseitigen Systemen verwendet und daher von diesen verstanden wird. Im übrigen gibt es für die Datenaufbereitung verschiedene Möglichkeiten.

In einer ersten Variante kann vorgesehen sein, jeden ausgewählten Reisezeitwert Rᵢ(t^{(j)}) der Streckenkanten des berücksichtigten Startort-Umgebungsbereichs explizit als Verkehrsinformation, d.h. als Bestandteil einer zu übertragenden Verkehrsmeldung, zu berücksichtigen. Je nach fahrzeugseitig vorhandener Systemintelligenz sind Varianten mit besser angepaßter und/oder geringerer zu übertragender Datenmenge möglich. So veranschaulichen die Fig. 5 und 6 eine Variante, bei der aus den ausgewählten kantenspezifischen Reisezeiten individualisierbare und damit identifizierbare Verkehrsereignisse abgeleitet werden, die dann in ihrer zeitlichen Entwicklung verfolgt und in Verkehrsinformationen als Ganzes gemeldet werden können. Alternativ dazu können individuelle Verkehrsereignisse direkt aus gemessenen Verkehrsdaten statt aus Reisezeiten abgeleitet werden. Dazu werden zweckmäßigerweise die Zeitachsen sowohl für den aktuellen Zeitpunkt als auch für die Prognosezeitpunkte diskretisiert, wie dies auch bei herkömmlichen Systemen üblich ist. So ist im Beispiel von Fig. 6 für die aktuelle Zeitachse ein Diskretisierungsintervall von 10min und für die Prognosezeitachse ein Prognoseintervall von 5min gewählt. Die generierten Verkehrsereignisse können zum einen unterscheidbare verkehrliche Objekte, wie Staus, zähflüssiger Verkehr, freier Verkehr etc., sein. Zum anderen besteht die Möglichkeit, die jeweils ausgewählte kantenspezifische Reisezeit mit einem Referenzwert zu vergleichen, und für den Fall, daß sich eine Abweichung um mehr als ein vorgebbarer Schwellwert ergibt, diese Abweichung als ein Verkehrsereignis zu identifizieren. Dies ist in Fig. 5 beispielhaft anhand des Reisezeitverlaufs für die Kante p=5 gemäß Fig. 3 veranschaulicht. Als Referenzwert wird hier, wie punktiert gezeichnet, eine zeitlich konstante, mittlere Reisezeit R_{5R} angenommen, wie sie für den Fall des freien, ungestörten Verkehrs prognostiziert wird. Überschreitet die ausgewählte Reisezeit R₅(t⁽¹⁾), wie gezeigt, den Referenzwert R_{5R} um mehr als einen Schwellwert R_{S}, wird für die betreffende Streckenkante p=5 das Auftreten eines entsprechenden Verkehrsereignisses angenommen.

Fig. 6 veranschaulicht eine mögliche Vorgehensweise zur Archivierung von dergestalt generierten Verkehrsereignissen mit identifizierbarer Ereignisnummer. Jeder ausgemalte Kreispunkt in Fig. 6 symbolisiert einen Zeitpunkt innerhalb eines vorgegebenen Prognosehorizonts h von z.B. 20min, zu dem die erzeugten Ereignisnummern für die Verkehrsereignisse gespeichert werden. Die entsprechenden Verkehrsereignisse werden periodisch zum jeweils aktuellen Zeitpunkt t berechnet und bleiben jeweils für das gewählte Prognosezeitinkrement t^{p} von z.B. 5min gültig. Die auf der Diagonalen D liegenden Punkte repräsentieren aktuelle Verkehrsdaten. Die Diskretisierung der aktuellen Zeitachse kann, wie gesagt, durch ein festes Intervall von z.B. 10min, zusätzlich oder alternativ jedoch auch ereignisgesteuert festgelegt werden. So stellt in Fig. 6 der aktuelle Zeitpunkt 15:15 einen zusätzlichen Bestimmungszeitpunkt dar, für den ereignisbedingt ein zusätzlicher Vorgang zur Bestimmung von bereitzustellenden Verkehrsinformationen durchgeführt wird.

Mit der erläuterten Generierung von Verkehrsereignissen als bereitzustellende Verkehrsdaten ist es möglich, den Rechen- und Datenübertragungsaufwand des weiteren dadurch gering zu halten, daß nur noch Änderungen eines einmal für eine jeweilige Kante erkannten Ereignisses als Verkehrsinformation über dieses Ereignis bereitgestellt werden. Des weiteren ist es zweckmäßig, bei der Aufbereitung von zu übertragenden Verkehrsdaten auch Löschmeldungen vorzusehen, mit denen erkannte bzw. gemeldete Verkehrsereignisse wieder gelöscht werden können, wenn bei einem aktuellen Auswertevorgang festgestellt wird, daß das betreffende Ereignis nicht mehr vorliegt, weil sich z.B. ein bislang vorhandener Stau aufgelöst hat bzw. sich die prognostizierte Reisezeit von einem erhöhten Wert wieder dem Erwartungswert für freien Verkehr genähert hat.

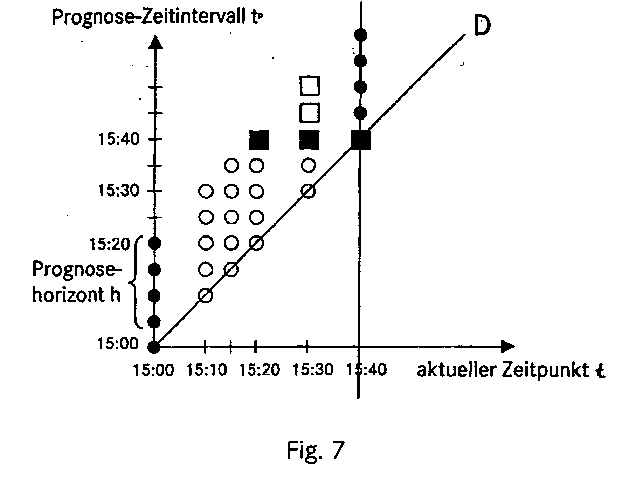

Fig. 7 zeigt eine mögliche Vorgehensweise zur Generierung solcher Löschmeldungen. Zum einen werden für den aktuellen Zeitpunkt Löschmeldungen für früher prognostizierte Verkehrsinformationen erzeugt, die zum aktuellen Zeitpunkt nicht mehr Verkehrsereignisse beinhalten, als sie in gleicher Weise in der aktuellen Verkehrsinformation auftreten, was für jeden aktuellen Zeitpunkt wiederholt wird. Mit anderen Worten wird für jedes prognostizierte Verkehrsereignis, dessen Verkehrsdaten nicht mehr in den aktuellen Verkehrsdaten existieren, eine entsprechende Löschmeldung generiert. Dieser Fall betrifft im Diagramm von Fig. 7 die ausgefüllten Quadrate und die nicht ausgefüllten Kreise oberhalb der Diagonale auf Fig. 7. Zudem werden die Löschmeldungen für den aktuellen Zeitpunkt, die in der aktuellen Verkehrsinformation enthalten sind, einem zu bildenden Satz von Löschmeldungen hinzugefügt, was wieder für jeden aktuellen Zeitpunkt wiederholt wird, d.h. es erfolgt eine Übernahme der Löschmeldungen aus den aktuellen Verkehrsdaten. Dies betrifft den mit dem ausgefüllten Quadrat symbolisierten Punkt auf der Diagonalen von Fig. 7. Des weiteren werden Löschmeldungen für zu einem zukünftigen Prognosezeitpunkt gehörige Ereignisse dann generiert, wenn die Ereignisse zwar in einem früheren Bestimmungszyklus erzeugt wurden, im aktuellen Bestimmungszyklus aber nicht mehr vorhanden sind. Beispiele hierfür sind in Fig. 7 mit den nicht ausgefüllten Quadraten markiert.

Zur Erzeugung der Löschmeldungen ist in der Zentrale 1 ein entsprechender Löschmeldungsgenerator 10 vorgesehen, im Beispiel der Fig. 1 im fahrzeugunabhängigen, wegenetzbezogenen Teil 3 der Zentrale 1. Dieser Teil 3 enthält außerdem eine Transformationseinheit 11, welche Daten über aktuelle und prognostizierte, von den Fahrzeugpositionen unabhängige Reisezeitdaten von der Reisezeitberechnungseinheit 4 empfängt und in ein fahrzeugseitig verwendetes Datenformat umwandelt. Die transformierten Daten werden von der Transformationseinheit 11 in einen zugehörigen Speicher 12 eingeschrieben, der somit aktuelle und prognostizierte Reisezeitdaten im fahrzeugseitig verwendeten Datenformat für verschiedene Fahrtantrittszeitpunkte enthält und vom Löschmeldungsgenerator 10 gelesen werden kann. Auf diese Weise vermag der Löschmeldungsgenerator 10 für den jeweiligen Berechnungszeitpunkt das Verschwinden früher vorhandener Verkehrs zustände und damit der entsprechenden Verkehrsinformationen zu erkennen und die zugehörigen Löschmeldungen zu erzeugen. Dabei berücksichtigt er zusätzlich die von der Einheit 19 gelieferten sonstigen aktuellen und prognostizierten Verkehrsinformationen. Letztere werden auch einer im fahrzeugbezogenen Teil 2 der Zentrale 1 angeordneten Listenerstellungsmodul 13 zugeführt, das zudem die Löschmeldungen vom Löschmeldungsgenerator 10 und die in das fahrzeugseitig verwendete Datenformat transformierten, zeitrichtig ausgewählten Verkehrsprognosedaten von der Transformationseinheit 9 empfängt.

Aus den zugeführten Informationen generiert das Listenerstellungsmodul 13 eine Gesamtprognoseliste aller für das anfragende Fahrzeug, d.h. den vorgegebenen Startort und den vorgegebenen Startzeitpunkt relevanten Verkehrsdaten. Diese werden dann als Verkehrsmeldung in Form einer Gesamtprognoseliste dem anfragenden Fahrzeug übermittelt, wo von einem dortigen Fahrzeug-Endgerät 14 auf der Basis der in der Gesamtprognoseliste enthaltenen Verkehrsdaten und von im Fahrzeug gespeicherten Daten individuell eine optimale Route bestimmt werden kann. Mit anderen Worten ist das fahrzeugseitige System in der Lage, für einen jeweils gewünschten Zielort anhand der zeitrichtig übermittelten, kantenspezifischen Reisezeitinformationen oder äquivalenten Informationen sowie gegebenenfalls der weiteren Verkehrsinformationen aus der zentralenseitigen Einheit 19 eine optimale Route zu einem gewünschten Zielort aufzufinden, welcher der Zentrale 1 für die Bereitstellung der betreffenden Verkehrsinformationen nicht bekannt zu sein braucht. Diese Zielortunabhängigkeit der Bereitstellung von Verkehrsinformationen durch die Zentrale 1 gemäß dem vorliegenden Verfahren ist von wesentlicher Bedeutung, da die Übermittlung eines Zielorts vom Fahrzeug zu einer Zentrale häufig unerwünscht ist. Zudem hat die erfindungsgemäße Vorgehensweise den Vorteil, daß die bereitgestellten Verkehrsinformationen für die geplante, zum vorgegebenen Anfangszeitpunkt am vorgegebenen Startort beginnende Fahrt auch dann noch unverändert gültig bleiben, wenn sich ein eventuell ins Auge gefaßter Zielort kurzfristig ändert.

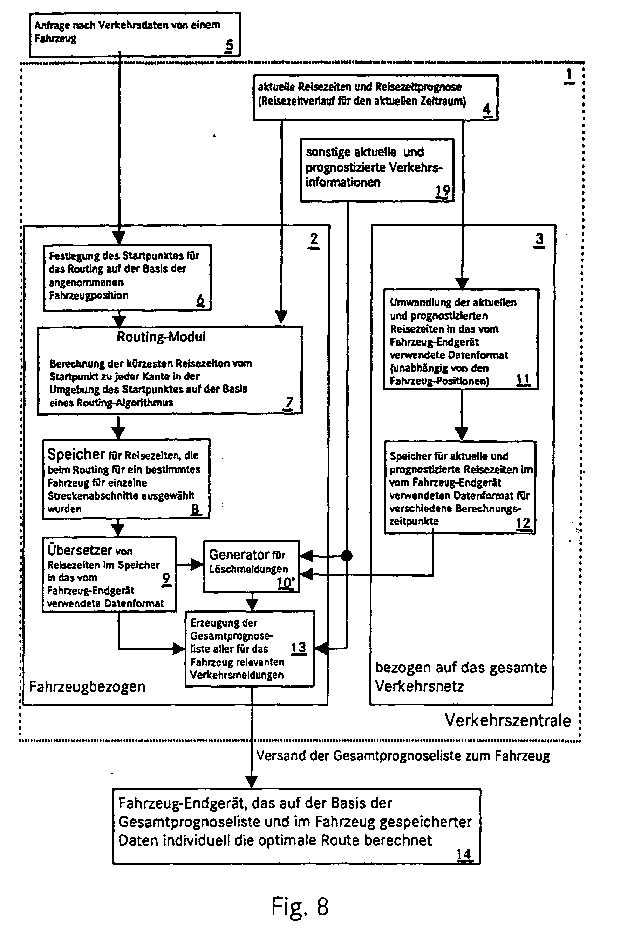

Es versteht sich, daß sich das beschriebene, erfindungsgemäße Verfahren auch bei Verwendung anderer Kostenfunktionen als der Reisezeit analog einsetzen läßt, insbesondere für den Fall, daß nicht die jeweils schnellste, sondern die Route mit dem niedrigsten Energie- bzw. Kraftstoffverbrauch als optimale Route betrachtet und gesucht wird. Weiter versteht sich, daß je nach Anwendungsfall zusätzliche Komponenten in der Zentrale 1 vorgesehen oder auf einige der in Fig. 1 gezeigten Komponenten verzichtet werden kann. So kann eine separate Datentransformationseinheit in der Zentrale 1 entfallen, wenn das dort verwendete Datenformat bereits dem fahrzeugseitig verwendeten Datenformat entspricht. Des weiteren ist die im Beispiel von Fig. 1 gezeigte Aufteilung der verschiedenen Komponenten in der Zentrale 1 auf fahrzeugbezogene Komponenten und fahrzeugunabhängige, sich auf das gesamte Verkehrswegenetz beziehende Komponenten nicht fest, sondern kann nach Bedarf variiert werden. Einige solcher Varianten sind in den Fig. 8 bis 11 dargestellt, wobei funktionell entsprechende Komponenten jeweils mit gleichen Bezugszeichen versehen sind und zu deren dataillierter Beschreibung auf diejenige zu Fig. 1 verwiesen werden kann.

Fig. 8 zeigt ein Beispiel, bei dem der Löschmeldungsgenerator 10 im fahrzeugbezogenen Teil 2 der Zentrale 1 angeordnet ist und dementsprechend die Löschmeldungen nur fahrzeugbezogen, d.h. abgestellt auf die für die jeweilige Verkehrsdatenanfrage geltenden Anfangsbedingungen erzeugt, wobei er in diesem Fall verglichen mit dem Beispiel von Fig. 1 zusätzlich die Verkehrsdateninformationen aus der fahrzeugbezogenen Datentransformationseinheit 9 empfängt und verwertet.

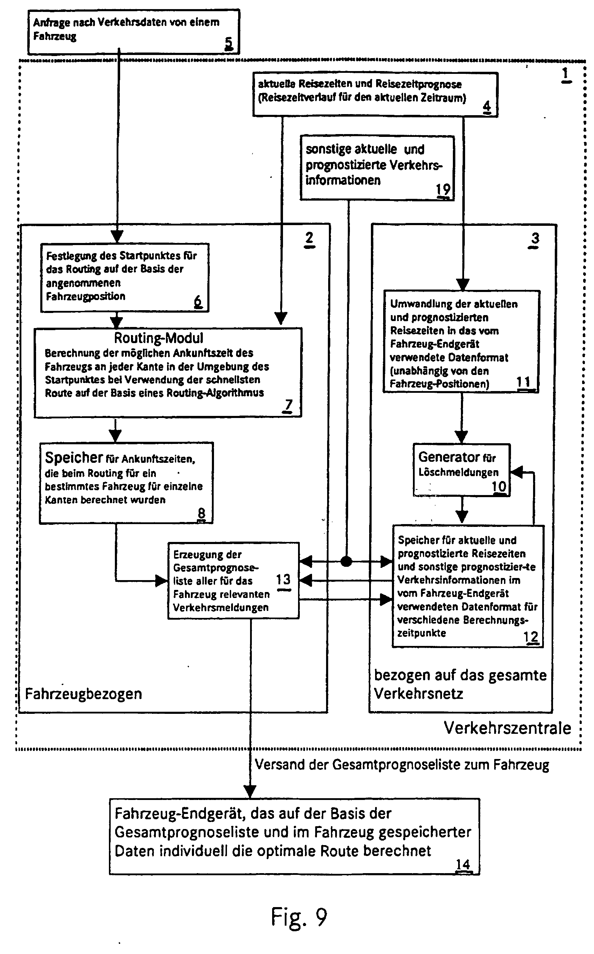

Fig. 9 zeigt eine Auslegung der Verkehrszentrale 1, die sich von derjenigen gemäß Fig. 1 dadurch unterscheidet, daß zum einen im fahrzeugbezogenen Systemteil 2 die Datentransformationseinheit 9 entfallen ist und zum anderen der im fahrzeugunabhängigen Systemteil 3 der Zentrale 1 vorgesehene Speicher 12 zusätzlich zur Speicherung der vom Löschmeldungsgenerator 10 generierten Löschmeldungen eingerichtet ist und außerdem dazu dient, auch alle anderen für die Erstellung der Gesamtprognoseliste relevanten Daten zu halten, die ihm vom Listenerstellungsmodul 13 und von der Einheit 19 zugeführt und dort fahrzeugunabhängig gespeichert werden können.

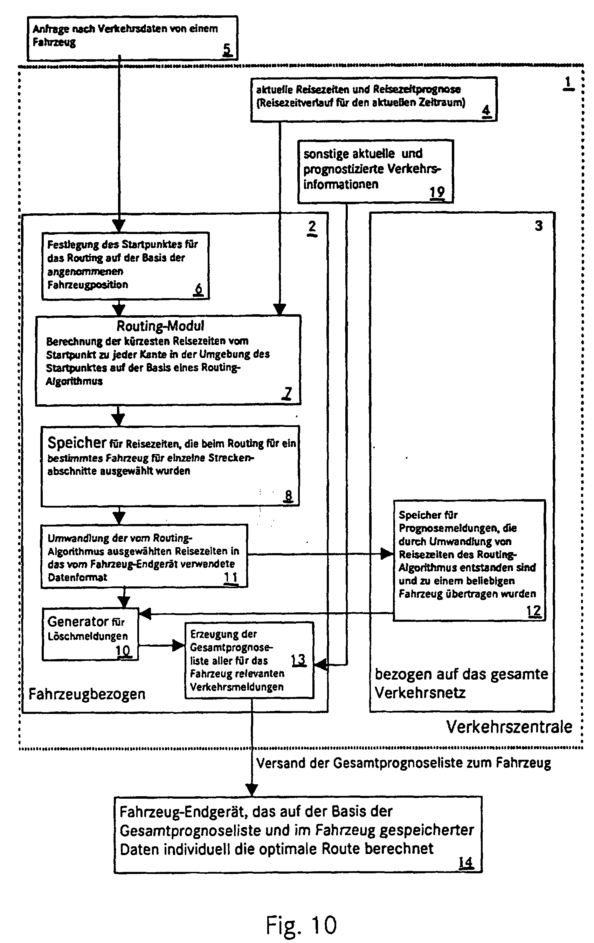

Das in Fig. 10 dargestellte Ausführungsbeispiel entspricht demjenigen von Fig. 8 mit der Ausnahme, daß hier nicht nur die Löschmeldungserzeugung, sondern auch die Datentransformation rein fahrzeugbezogen erfolgt, weshalb die Transformationseinheit 11 im fahrzeugunabhängigen Systemteil 3 der Zentrale 1 entfällt und dafür der in diesem Systemteil 3 angeordnete Speicher 12 die einzuspeichernden Verkehrsinformationen von der im fahrzeugbezogenen Systemteil 2 angeordneten Datentransformationseinheit 9 erhält.

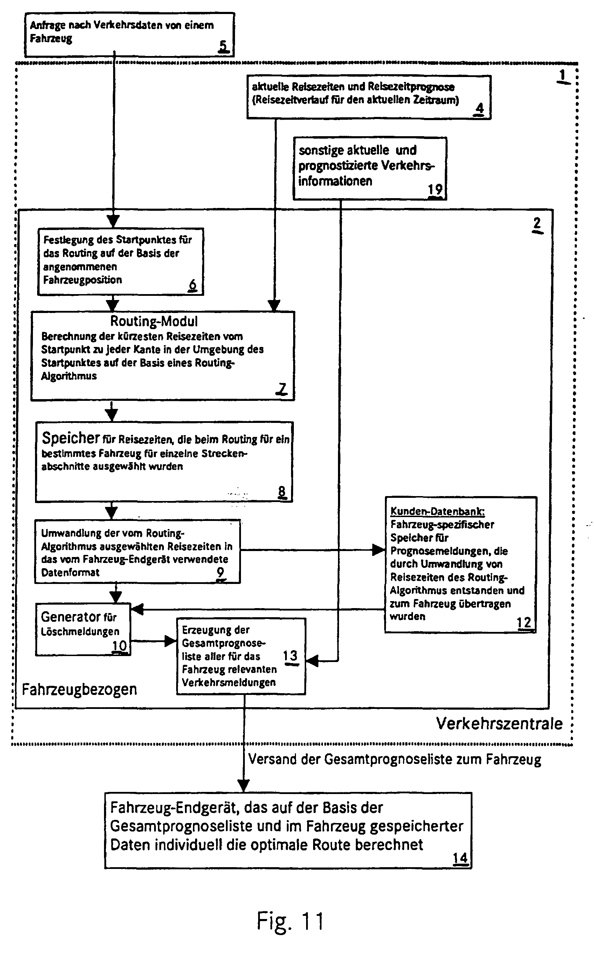

Das in Fig. 11 dargestellte Ausführungsbeispiel entspricht demjenigen von Fig. 1 mit den Ausnahmen, daß hier zum einen sowohl die Erzeugung von Löschmeldungen als auch aller anderen Datentransformationen rein fahrzeugbezogen erfolgt und zum anderen in dem insoweit modifizierten, eine Kunden-Datenbank bildenden Speicher 12 fahrzeugspezifisch gespeicherte, versandte Meldungen abgelegt werden. Deshalb sind alle diesbezüglichen Einheiten im fahrzeugabhängigen Systemteil 2 der Zentrale angeordnet.

Wie aus den obigen Beispielen deutlich wird, enthalten die zur Übertragung erfindungsgemäß bereitgestellten Verkehrsinformationen jeweils mindestens die Informationen über die zu einem routenoptimiert bestimmten Ankunftszeitpunkt aus den gesamten prognostizierten Reisezeitdaten gehörigen Reisezeiten, oder allgemeiner Kostenfunktionswerte, für die verschiedenen Streckenabschnitte mindestens eines den gegebenen Startort enthaltenden Teilbereichs des gesamten zugrundeliegenden Verkehrswegenetzes bzw. von diesen ausgewählten Reisezeitdaten abgeleitete Informationen. Darüber hinaus können je nach Bedarf weitere zeitrichtig zum betreffenden routenoptimierten Ankunftszeitpunkt für die jeweilige Streckenkante ausgewählte Verkehrsinformationen berücksichtigt werden, z.B. der jeweilige Ankunftszeitpunkt selbst. In jedem Fall können durch die vorliegende Erfindung mit relativ geringem Aufwand zentralenseitig zuverlässige Verkehrsmeldungen über sowohl die aktuelle als auch die prognostizierte Verkehrslage auf Anfrage bereitgestellt und zum anfragenden Fahrzeug übertragen werden, wo sie für Navigationsmaßnahmen eines dortigen autonomen Zielführungssystems oder dergleichen im richtigen Datenformat zur Verfügung stehen. Die zu übertragende Datenmenge kann dabei relativ gering gehalten werden, und es sind herkömmliche fahrzeugseitige Navigationssysteme verwendbar, da schon mit den erfindungsgemäß in der Zentrale ausgewählten, prognostizierten, kantenspezifischen Kostenfunktionswertdaten (Reisezeitdaten) durch ein herkömmliches verkehrsabhängiges Routensuchverfahren die Bestimmung der jeweils optimalen Route zu einem variabel vorgebbaren, gewünschten Zielort unter Berücksichtigung des aktuellen und voraussichtlichen zukünftigen Verkehrszustands möglich ist.

Wie aus den obigen Beispielen weiter ersichtlich, kann die Auswahl der aktuellen und prognostizierten Werte der Kostenfunktion, z.B. Kantenreisezeiten, die erfindungsgemäß durch eine Routenberechnung erfolgt, bei der Routenberechnung im Fahrzeug zur gleichen optimalen Route führen, die im Fall von zentralenbasierten Zielführungssystemen berechnet würde. Mit anderen Worten kann die erfindungsgemäße Auswahl der Kostenfunktionswerte durch den Routing-Algorithmus in der Zentrale dazu führen, daß die Qualität der Routenwahl bei autonomen Zielführungssystemen die Qualität der zentralenbasierten Zielführung erreicht. Dabei bleibt der Vorteil der autonomen Zielführungssysteme gegenüber zentralenbasierten Systemen, daß der Zielort des Fahrzeugs bei der Datenaufbereitung in der Zentrale nicht notwendig ist, erhalten.

## Patentansprüche

1. Verfahren zur Bereitstellung von Verkehrsinformationen für ein jeweiliges Fahrzeug auf einem Verkehrswegenetz, bei dem
- ausgehend von einem jeweiligen Startort (S) und Startzeitpunkt (t₀) aktuelle und prognostizierte Verkehrsdaten für wenigstens einen den Startort enthaltenden Teilbereich des Verkehrswegenetzes in einer Verkehrszentrale (1) ermittelt und an das jeweilige Fahrzeug übertragbar aufbereitet werden,
**dadurch gekennzeichnet, dass**
- ohne Kenntnis eines Zielortes in der Verkehrszentrale (1) anhand von dort vorhandenen Verkehrsdaten, die mindestens die aktuellen und prognostizierte Funktionswerte einer vorgegebenen, verkehrsabhängigen Kostenfunktion für die einzelnen Streckenkanten des Wegenetzes umfassen, abhängig vom jeweiligen Startort (S) und Startzeitpunkt (t₀) mittels eines verkehrsabhängigen Routensuchverfahrens eine die Kostenfunktion optimierende Route vom Startort zu jeder Streckenkante des betrachteten Wegenetz-Teilbereichs berechnet und der zugehörige Streckenkanten-Ankunftszeitpunkt bestimmt wird,
- für die jeweilige Streckenkante aus den in der Zentrale vorhandenen, aktuellen und prognostizierten Kostenfunktionswerten derjenige ausgewählt wird, der zum ermittelten Ankunftszeitpunkt gehört und
- als zur Übertragung aufzubereitende Verkehrsdaten wenigstens die so ausgewählten Kostenfunktionswerte für die einzelnen Streckenkanten des betrachteten Wegenetz-Teilbereichs herangezogen werden.

2. Verfahren nach Anspruch 1, weiter
**dadurch gekennzeichnet, daß**
die Aufbereitung der Verkehrsdaten eine in der Zentrale (1) durchgeführte Datentransformation in ein fahrzeugseitig verwendetes Datenformat beinhaltet.

3. Verfahren nach Anspruch 1 oder 2, weiter
**dadurch gekennzeichnet, daß**
die Aufbereitung der Verkehrsdaten in der Zentrale (1) die Erzeugung von identifizierbaren Verkehrsereignissen aus den ausgewählten Kostenfunktionswerten beinhaltet, wobei die Verkehrsereignisse vorgegebene verkehrliche Objekte und/oder um mehr als ein vorgegebenes Maß von vorgegebenen Referenz-Kostenfunktionswerten abweichende ausgewählte Kostenfunktionswerte repräsentieren.

4. Verfahren nach einem der Ansprüche 1 bis 3, weiter
**dadurch gekennzeichnet, daß**
die Aufbereitung der Verkehrsdaten in der Zentrale (1) eine Erzeugung von Löschmeldungen umfaßt, mit denen identifizierbare Teile von zuvor aufbereiteten Verkehrsdaten individuell als nicht mehr gültig markiert werden.

5. Vorrichtung zur Bereitstellung von Verkehrsinformationen für ein jeweiliges Fahrzeug auf einem Verkehrswegenetz, mit
- mindestens einer Verkehrszentrale (1), in der ausgehend von einem jeweiligen Startort (S) und Startzeitpunkt (t₀) aktuelle und prognostizierte Verkehrsdaten für wenigstens einen den Startort enthaltenden Teilbereich des Verkehrswegenetzes ermittelt und zur Übertragung an ein jeweiliges Fahrzeug aufbereitet werden,
**dadurch gekennzeichnet, dass**
- ohne Kenntnis eines Zielortes die Verkehrszentrale (1) Mittel (4) zur Bereitstellung von Verkehrsdaten, die mindestens die aktuellen und prognostizierten Funktionswerte einer vorgegebenen, verkehrsabhängigen Kostenfunktion für die einzelnen Streckenkanten des Wegenetzes umfassen, Mittel (6, 7) zur vom jeweiligen Startort (S) und Startzeitpunkt (t₀) abhängigen Berechnung einer die Kostenfunktion optimierenden Route vom Startort zu jeder Streckenkante des betrachteten Wegenetz-Teilbereichs und der zugehörigen Streckenkanten-Ankunftszeit mittels eines verkehrsabhängigen Routensuchverfahrens sowie zum streckenkantenspezifischen Auswählen des zur berechneten Ankunftszeit gehörigen Kostenfunktionswertes aus den vorhandenen Kostenfunktionswerten und Mittel (8, 9, 13) zur Heranziehung wenigstens der so ausgewählten Kostenfunktionswerte für die einzelnen Streckenkanten des betrachteten Wegenetz-Teilbereichs als zur Übertragung aufzubereitende Verkehrsdaten aufweist.

6. Vorrichtung nach Anspruch 5, weiter
**dadurch gekennzeichnet, daß**
die Verkehrszentrale (1) eine oder mehrere Datentransformationseinheiten (9, 11) zur Transformation fahrzeugbezogener und/oder wegenetzbezogener Verkehrsdaten in ein fahrzeugseitig verwendetes Datenformat aufweist.

7. Vorrichtung nach Anspruch 5 oder 6, weiter
**dadurch gekennzeichnet, daß**
die Verkehrszentrale (1) einen Löschgenerator (10) zur Erzeugung fahrzeugbezogener und/oder wegenetzbezogener Löschmeldungen zur Markierung von identifizierbaren Teilen früher aufbereiteter Verkehrsdaten als nicht mehr gültig aufweist.

## Claims

1. Method for the provision of traffic information for a particular vehicle on a traffic route network, in which:
- beginning at a particular starting point (S) and starting time (to), current and predicted traffic data for at least a partial zone of the traffic route network that contains the starting point are determined at a traffic control centre (1) and prepared for transmission to the said vehicle,
**characterised in that**
- without knowledge of a destination, at the traffic control centre (1) and with reference to traffic information available there, the said information comprising at least the current and predicted function values of a specified, traffic-dependent cost function for the individual stretches of the route network as a function of the particular starting point (S) and staring time (t₀), a route which optimises the cost function from the starting point to any stretch of the said partial route network zone is computed by means of a traffic-dependent route-search process and the associated stretch end arrival time is determined,
- for the stretch in question, from among the current and predicted cost function values held at the control centre that which pertains to the arrival time determined is selected, and
- as traffic data to be prepared for transmission, at least the cost function values for the individual stretches of the partial route network zone considered are adopted.

2. Method according to Claim 1, further
**characterised in that**
the preparation of the traffic data includes a data transformation carried out at the control centre (1) into a data format used on the vehicle.

3. Method according to Claims 1 or 2, further
**characterised in that**
the preparation of the traffic data at the control centre (1) includes the production of identifiable traffic events from the selected cost function values, such that the traffic events represent specified traffic-related objects and/or selected cost function values that deviate by more than a specified amount from specified reference cost function values.

4. Method according to any of Claims 1 to 3, further
**characterised in that**
the preparation of the traffic data at the control centre (1) includes the production of cancellation messages by means of which identifiable parts of previously prepared traffic data can be marked individually as no longer valid.

5. Device for the preparation of traffic information for a particular vehicle on a traffic route network, with:
- at least one traffic control centre (1) in which, beginning at a particular starting point (S) and starting time (t₀); current and predicted traffic data for at least a partial zone of the traffic route network which contains the starting point are determined and prepared for transmission to the vehicle concerned,
**characterised in that**
- without knowledge of a destination, the traffic control centre 1 comprises means (4) for the preparation of traffic data, the said data comprising at least the current and predicted function values of a specified, traffic-dependent cost function for the individual stretches of the route network, means (6, 7) for the computation, as a function of any particular starting point (S) and starting time (t₀), of a route that optimises the cost function from the starting point to any stretch end of the said partial route network zone and the associated stretch end arrival time by means of a traffic-dependent route-search process and for the stretch-specific selection of the cost function value associated with the calculated arrival time from among the cost function values available, and means (8, 9, 13) for adopting at least the cost value functions so selected for the individual stretches of the partial route network zone considered as traffic data to be prepared for transmission.

6. Device according to Claim 5, further
**characterised in that**
the traffic control centre (1) comprises one or more data transformation units (9, 11) for the transformation of vehicle-related and/or route-network-related traffic data into a data format that is used on board a vehicle.

7. Device according to Claims 5 or 6, further
**characterised in that**
the traffic control centre (1) comprises a cancellation generator (10) for the production of vehicle-related and/or route-network-related cancellation messages for the marking of identifiable parts of traffic data prepared earlier as no longer valid.

## Revendications

1. Procédé de préparation des informations de circulation pour un véhicule correspondant sur un réseau routier de circulation, pour lequel, à partir d'un lieu de départ (S) correspondant et d'un moment de départ (t₀), des données de circulation actuelles et prévisionnelles sont déterminées pour au moins une zone partielle contenant le lieu de départ du réseau routier de circulation dans une centrale de circulation (1) et traitées pour pouvoir être transmises au véhicule correspondant, **caractérisé en ce que**
- sans avoir connaissance d'un lieu de destination à la centrale de circulation (1) à l'aide des données de circulation existant là-bas comprenant au moins les valeurs de fonction actuelles et prévisionnelles d'une fonction de coûts donnée dépendant de la circulation pour chaque parcours du réseau routier, l'itinéraire optimisant la fonction de coûts du lieu de départ vers chaque parcours de la zone partielle du réseau routier considéré est calculé en fonction du lieu de départ (S) correspondant et du moment de départ (t₀) et le point d'arrivée adéquat du parcours est déterminé,
- pour chaque parcours, on choisit, à partir des valeurs de fonction de coûts actuelles et prévisionnelles existant dans la centrale, celle qui appartient au moment d'arrivée déterminé et
- on utilise au moins les valeurs de fonction de coûts ainsi sélectionnées pour chaque parcours de la zone partielle considérée du réseau routier comme données de circulation à traiter pour la transmission.

2. Procédé selon la revendication 1, **caractérisé en ce que** la préparation des données de circulation comporte une transformation des données effectuée à la centrale (1) en un format de données utilisé du côté du véhicule.

3. Procédé selon la revendication 1 ou 2, **caractérisé en ce que** la préparation des données de circulation à la centrale (1) comporte la génération d'événements de circulation identifiables à partir des valeurs de la fonction de coûts sélectionnée, les événements de circulation représentant des objets de circulation donnés et/ou des valeurs de la fonction de coûts sélectionnées s'écartant de plus d'une mesure donnée des valeurs de fonction de coûts de référence.

4. Procédé selon l'une quelconque des revendications 1 à 3, **caractérisé en ce que** la préparation des données de circulation à la centrale (1) comprend une génération de messages d'effacement, avec lesquels des parties identifiables de données de circulation préparées précédemment sont marquées comme n'étant plus valables.

5. Dispositif de préparation d'informations de circulation pour un véhicule correspondant sur un réseau routier de circulation, doté
- d'au moins une centrale de circulation (1), dans laquelle, à partir d'un lieu de départ (S) correspondant et d'un moment de départ (t₀), des données de circulation actuelles et prévisionnelles sont déterminées pour au moins une zone partielle contenant le lieu de départ du réseau routier de circulation et sont préparées pour transmission à un véhicule correspondant, **caractérisé en ce que**
- sans connaissance du lieu de destination, la centrale de circulation (1) comprend des moyens (4) pour la préparation des données de circulation, qui comprennent au moins les valeurs actuelles et prévisionnelles d'une fonction de coûts données dépendant de la circulation pour le parcours individuel du réseau routier, qui comportent des moyens (6, 7) pour le calcul en fonction du lieu de départ (S) correspondant et du moment de départ (t₀) d'un itinéraire optimisant la fonction de coûts du lieu de départ vers chaque parcours de la zone partielle considérée du réseau routier et du moment d'arrivée adéquat au parcours au moyen d'un procédé de recherche d'itinéraire dépendant de la circulation ainsi que pour la sélection spécifique au parcours de la valeur de la fonction de coûts à calculer afférente au moment d'arrivée à partir des valeurs existantes de la fonction de coûts et des moyens (8, 9, 13) pour déterminer au moins la valeur de la fonction de coûts ainsi sélectionnée pour le parcours individuel de la zone partielle considérée du réseau routier pour la transmission des données de circulation à préparer.

6. Dispositif selon la revendication 5, **caractérisé en ce que** la centrale de circulation (1) comporte une ou plusieurs unités de transformation des données (9, 11) pour la transformation des données de circulation relatives au véhicule et/ou au réseau routier dans un format utilisé du côté du véhicule.

7. Dispositif selon la revendication 5 ou 6, **caractérisé en ce que** la centrale de circulation (1) comporte un générateur d'effacement (10) pour la génération de messages d'effacement relatifs au véhicule et/ou au réseau routier pour le marquage des parties identifiables de données de circulation préparées auparavant et n'étant plus valables.
